# EUROPEAN PATENT APPLICATION

(11) **EP 4 086 748 A1**
(43) Date of publication of application: **09.11.2022**
(21) Application number: 21738746.3
(22) Date of filing: 06.01.2021
(51) Int. Cl.: G06F 3/14

(54) **METHOD AND APPARATUS FOR CONTROLLING DISPLAY FREQUENCY OF DISPLAY SCREEN, AND ELECTRONIC DEVICE**

(30) Priority: 06.01.2020 CN 202010008470
(71) Applicant: GUANGDONG OPPO MOBILE TELECOMMUNICATIONS CORP., LTD., Dongguan, Guangdong 523860 (CN)
(72) Inventor: CUI, Zhijia, Dongguan, Guangdong 523860 (CN); YANG, Le, Dongguan, Guangdong 523860 (CN)
(74) Representative: Taor, Simon Edward William
(86) International application number: PCT/CN2021/070498
(87) International publication number: WO 2021/139691

(57) **Abstract**

A method and apparatus for controlling a display frequency of a display screen, and an electronic device are provided. The method includes: (S101) determining, in a command mode in response to no image data being transmitted to the display screen by an application processor currently, whether the display screen is in a self-refreshing state; (SI02) transmitting, in response to the display screen being in the self-refreshing state, notification information to the application processor after self-refreshing of the display screen is completed, the notification information being used for notifying the application processor to transmit the image data to the display screen; and (S103) receiving the image data transmitted by the application processor, and updating the display frequency with a first frequency at which the application processor transmits the image data.

## Description

### CROSS-REFERENCE TO RELATED APPLICATIONS

The present application claims priority to and the benefit of Chinese Patent Application No. 202010008470.8, filed with China National Intellectual Property Administration on January 06, 2020, the entire disclosure of which incorporated herein by reference.

### FIELD

The present disclosure relates to the technical field of electronic device, and more particularly, to a method and apparatus for controlling a display frequency of a display screen, and an electronic device.

### BACKGROUND

With the development of electronic devices, the signal transmission logic between a display screen and an application processor (AP) is usually that the AP transmits image data to the display screen at a certain frequency for the display screen to display the image data. In some application scenarios, the display screen and the AP will also transmit certain instruction signals to each other. For example, the AP may control the display screen by transmitting instruction signals to the display screen, and the display screen may also transmit instruction signals to the AP to notify the AP of a current state of the display screen.

### SUMMARY

Embodiments of the present disclosure seek to solve at least one of the problems existing in the related art to at least some extent.

Accordingly, the present disclosure provides a method and apparatus for controlling a display frequency of a display screen, and an electronic device, which can effectively avoid the delay of frequency switching of an application processor (AP), so that the display frequency of the display screen can be updated in time, and the display control effect can be improved.

An embodiment of a first aspect of the present disclosure provides a method for controlling a display frequency of a display screen, including: determining, in a command mode in response to no image data being transmitted to the display screen by an AP currently, whether the display screen is in a self-refreshing state; transmitting, in response to the display screen being in the self-refreshing state, notification information to the AP after self-refreshing of the display screen is completed, the notification information being used for notifying the AP to transmit the image data to the display screen; and receiving the image data transmitted by the AP, and updating the display frequency with a first frequency at which the AP transmits the image data.

An embodiment of a second aspect of the present disclosure provides an apparatus for controlling a display frequency of a display screen, including a first judgement module, a processing module and an updating module. The first judgement module is configured to determine, in a command mode in response to no image data being transmitted to the display screen by an AP currently, whether the display screen is in a self-refreshing state. The processing module is configured to transmit, in response to the display screen being in the self-refreshing state, notification information to the AP after self-refreshing of the display screen is completed, the notification information being used for notifying the AP to transmit the image data to the display screen. The updating module is configured to receive the image data transmitted by the AP and update the display frequency with a first frequency at which the AP transmits the image data.

An embodiment of a third aspect of the present disclosure provides a computer-readable storage medium having a computer program stored thereon. The computer program, when executed by a processor, enables a terminal to implement a method for controlling the display frequency of the display screen. The method includes the method for controlling the display frequency of the display screen according to the embodiment of the first aspect of the present disclosure.

An embodiment of a fourth aspect of the present disclosure provides an electronic device including: a processor; a memory configured to store executable program codes; a circuit board on which the processor and the memory are disposed; and a power supply circuit configured to supply power to at least one circuit or element of the electronic device. The processor is configured to execute a program corresponding to the executable program codes by reading the executable program codes stored in the memory, to implement the method for controlling the display frequency of the display screen according to the embodiment of the first aspect of the present disclosure.

Additional aspects and advantages of the present disclosure will be provided at least in part in the following description, or will become apparent at least in part from the following description, or can be learned from practicing of the present disclosure.

### BRIEF DESCRIPTION OF DRAWINGS

The above and/or additional aspects and advantages of the present disclosure will become more apparent and more understandable from the following description of embodiments in conjunction with the accompanying drawings.
FIG. 1 is a flowchart illustrating a method for controlling a display frequency of a display screen according to an embodiment of the present disclosure.
FIG. 2 is a flowchart illustrating a method for controlling a display frequency of a display screen according to an embodiment of the present disclosure.
FIG. 3 is a schematic application diagram of an embodiment of the present disclosure.
FIG. 4 is a schematic application diagram of the present disclosure.
FIG. 5 is a schematic structural diagram illustrating an apparatus for controlling a display frequency of a display screen according to an embodiment of the present disclosure.
FIG. 6 is a schematic structural diagram illustrating an apparatus for controlling a display frequency of a display screen according to another embodiment of the present disclosure.
FIG. 7 is a schematic structural diagram illustrating an electronic device according to an embodiment of the present disclosure.

### DESCRIPTION OF EMBODIMENTS

Embodiments of the present disclosure are described below in detail, examples of the embodiments are shown in accompanying drawings, and throughout the disclosure, the same or similar reference signs represent the same or similar components or components having the same or similar functions. The embodiments described below with reference to the accompanying drawings are exemplary and intended for explaining the present disclosure, rather than being construed as limitation on the present disclosure.

Embodiments of the present disclosure are described below in detail, examples of the embodiments are shown in accompanying drawings, and throughout the disclosure, the same or similar reference signs represent the same or similar components or the components having the same or similar functions. The embodiments described below with reference to the accompanying drawings are exemplary and merely used to explain the present disclosure, rather than being construed as limitation on the present disclosure. On the contrary, the embodiments of the present disclosure include all changes, modifications and equivalents falling within the spirit and concept of the appended claims.

In the related art, in the above signal transmission logic, a display screen usually performs self-refreshing at a certain refresh frequency. And in order to realize a synchronization between the transmission of the image data by an application processor (AP) and the self-refreshing frequency of the display screen, a switching frequency of the AP for transmitting the image data and the self-refreshing frequency of the display screen are usually in a multiple relationship with each other.

In this case, a frequency switching of the AP may not be timely enough, and there may be a delay of 0 to 1 frame, resulting in a delay in updating the display frequency of the display screen and affecting the display effect.

The present disclosure provides a method for controlling a display frequency of a display screen. The method includes: determining, in a command mode in response to no image data being transmitted to the display screen by an AP currently, whether the display screen is in a self-refreshing state; transmitting, in response to the display screen being in the self-refreshing state, notification information to the AP after self-refreshing of the display screen is completed, the notification information being used for notifying the AP to transmit the image data to the display screen; and receiving the image data transmitted by the AP, and updating the display frequency with a first frequency at which the AP transmits the image data.

In some embodiments, the method further includes, subsequent to determining whether the display screen is in the self-refreshing state: transmitting, in response to the display screen being not in the self-refreshing state, notification information to the AP.

In some embodiments, the method further includes, prior to no image data being transmitted to the display screen by the AP currently: determining whether the AP is transmitting image data to the display screen currently.

In some embodiments, the method further includes, subsequent to determining whether the AP is transmitting the image data to the display screen currently: determining, in response to no image data being transmitted to the display screen by the AP currently, a first duration for which no image data is transmitted by the AP; and controlling, in response to the first duration reaching a time threshold, the display screen to enter the self-refreshing state.

In some embodiments, the method further includes: determining, in a video mode in response to the image data being transmitted to the display screen by the AP currently, whether a change occurs between the image data received by the display screen and first image data, the first image data being the image data transmitted by the AP and received by the display screen previously; and performing self-refreshing control on the display screen based on a result of said determining.

In some embodiments, said performing the self-refreshing control on the display screen based on the result of said determining includes: controlling, when no change occurs between the image data received by the display screen and the first image data, or when a duration for which no change occurs between the image data received by the display screen and the first image data is smaller than or equal to the time threshold, the display screen not to enter the self-refreshing state; and controlling, when the change occurs between the image data received by the display screen and the first image data, or when the duration for which no change occurs between the image data received by the display screen and the first image data is greater than the time threshold, the display screen to enter the self-refreshing state.

In some embodiments, the method further includes, prior to determining, in the command mode in response to no image data being transmitted to the display screen by the AP currently, whether the display screen is in the self-refreshing state: monitoring, while the image data is being transmitted to the display screen by the AP, in real time whether an output frequency needs to be switched currently.

In some embodiments, said monitoring in real time whether the output frequency needs to be switched currently further includes: monitoring whether a change occurs in an updating frequency of the image data; and determining, in response to monitoring that the change occurs in the updating frequency of the image data, that the output frequency at which the AP transmits the image data to the display screen needs to be switched currently.

In some embodiments, said receiving the image data transmitted by the AP and updating the display frequency with the first frequency at which the AP transmits the image data includes: monitoring, in response to the image data being transmitted to the display screen by the AP, in real time a process of transmitting the image data to the display screen by the AP.

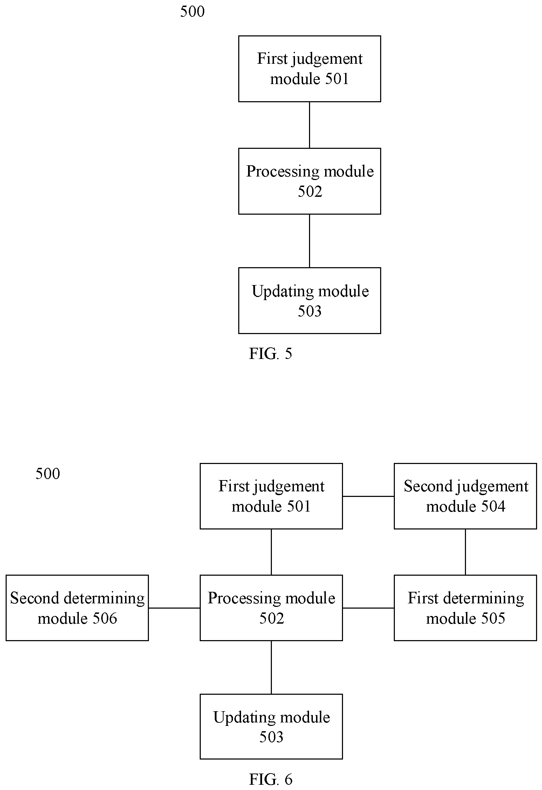

Referring to FIG. 5, the present disclosure further provides an apparatus 500 for controlling a display frequency of a display screen. The apparatus 500 includes a first judgement module 501, a processing module 502, and an updating module 503. The first judgement module 501 is configured to determine, in a command mode in response to no image data being transmitted to the display screen by an AP currently, whether the display screen is in a self-refreshing state. The processing module 502 is configured to transmit, in response to the display screen being in the self-refreshing state, notification information to the AP after self-refreshing of the display screen is completed, the notification information being used for notifying the AP to transmit the image data to the display screen. The updating module 503 is configured to receive the image data transmitted by the AP and update the display frequency with a first frequency at which the AP transmits the image data.

In some embodiments, the processing module 502 is further configured to transmit, in response to the display screen being not in the self-refreshing state, notification information to the AP.

In some embodiments, the apparatus further includes a second judgement module 504. The second judgement module 504 is configured to determine whether the AP is transmitting the image data to the display screen currently.

In some embodiments, the apparatus further includes a first determining module 505 and the processing module 502. The first determining module 505 is configured to determine, in response to no image data being transmitted to the display screen by the AP currently, a first duration for which no image data is transmitted by the AP. The processing module 502 is further configured to control, in response to the first duration reaching a time threshold, the display screen to enter the self-refreshing state.

In some embodiments, the apparatus further includes a second determining module 506 and the processing module 502. The second determining module 506 is configured to determine, in a video mode in response to the image data being transmitted to the display screen by the AP currently, whether a change occurs between the image data received by the display screen and first image data, the first image data being the image data transmitted by the AP and received by the display screen previously. The processing module 502 is further configured to perform self-refreshing control on the display screen based on a result of said determining.

In some embodiments, the processing module 502 is further configured to control, when no change occurs between the image data received by the display screen and the first image data, or when a duration for which no change occurs between the image data received by the display screen and the first image data is smaller than or equal to the time threshold, the display screen not to enter the self-refreshing state; and control, when the change occurs between the image data received by the display screen and the first image data, or when the duration for which no change occurs between the image data received by the display screen and the first image data is greater than the time threshold, the display screen to enter the self-refreshing state.

In some embodiments, the apparatus 500 is further configured to monitor, while the image data is being transmitted to the display screen by the AP, in real time whether an output frequency needs to be switched currently.

In some embodiments, the apparatus 500 is further configured to monitor whether a change occurs in an updating frequency of the image data; and determine, in response to the change occurring in the updating frequency of the image data, that the output frequency at which the AP transmits the image data to the display screen needs to be switched currently.

In some embodiments, the apparatus 500 is further configured to monitor, in response to the image data being transmitted to the display screen by the AP, in real time a process of transmitting the image data to the display screen by the AP.

The present disclosure also provides a computer-readable storage medium having a computer program stored thereon. The computer program, when executed by a processor, implements a method including: determining, in a command mode in response to no image data being transmitted to the display screen by an AP currently, whether the display screen is in a self-refreshing state; transmitting, in response to the display screen being in the self-refreshing state, notification information to the AP after self-refreshing of the display screen is completed, the notification information being used for notifying the AP to transmit the image data to the display screen; and receiving the image data transmitted by the AP, and updating the display frequency with a first frequency at which the AP transmits the image data.

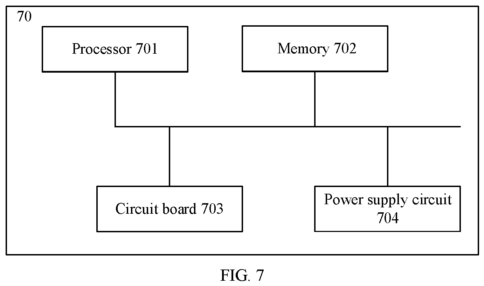

Referring to FIG. 7, the present disclosure further provides an electronic device 70 including a processor 701, a memory 702 configured to store executable program codes, a circuit board 703 on which the processor 701 and the memory 702 are disposed, and a power supply circuit 704 configured to supply power to at least one circuit or element of the electronic device. The processor 701 is configured to execute a program corresponding to the executable program codes by reading the executable program codes stored in the memory 702, to implement a method including: determining, in a command mode in response to no image data being transmitted to the display screen by an AP currently, whether the display screen is in a self-refreshing state; transmitting, in response to the display screen being in the self-refreshing state, notification information to the AP after self-refreshing of the display screen is completed, the notification information being used for notifying the AP to transmit the image data to the display screen; and receiving the image data transmitted by the AP, and updating the display frequency with a first frequency at which the AP transmits the image data.

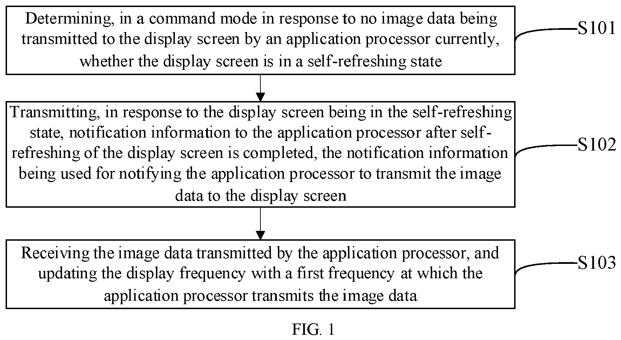

FIG. 1 is a flowchart illustrating a method for controlling a display frequency of a display screen according to an embodiment of the present disclosure.

This embodiment is exemplified by the case where the method for controlling the display frequency of the display screen is applied in an apparatus for controlling the display frequency of the display screen.

The method for controlling the display frequency of the display screen in the present embodiment is applied in the apparatus for controlling the display frequency of the display screen, and the apparatus for controlling the display frequency of the display screen may be provided in an electronic device, and the electronic device includes an AP and a display screen.

The method for controlling the display frequency of the display screen in this embodiment is specifically applied to a control logic of the display screen.

Referring to FIG. 1, the method includes actions at blocks S101 to S103.

At block S101, it is determined, in a command mode in response to no image data being transmitted to the display screen by the AP currently, whether the display screen is in a self-refreshing state.

When a transmission mode between the AP and the display screen is the command mode, the AP transmits the image data that needs to be displayed on the display screen side to the display screen at a certain frequency, so that the image data is displayed by the display screen. The certain frequency may be referred to as an initial output frequency. In practical application, the AP may update the initial output frequency with a new input frequency to output image data to the display screen at the new output frequency.

This process of switching from the initial output frequency to the new input frequency may be referred to as a process of frequency switching of the AP.

In the above process, it is assumed that the AP transmits the image data frame to be displayed on the display screen side to the display screen at the initial output frequency, and during the transmission process, it is possible to monitor in real time whether the frequency needs to be switched currently, and then the method for controlling the display frequency of the display screen in this embodiment is triggered by the monitored result.

For example, it may be monitored whether the updating frequency of the image data is changed. If the change of the updating frequency of the image data is monitored, it may be determined that the output frequency for the AP to transmit data to the display screen needs to be switched currently.

In a specific implementation process of this embodiment, specifically, when it is determined that the output frequency needs to be switched currently, it is triggered to determine whether the AP is currently transmitting the image data to the display screen, which can effectively ensure a timeliness of a switching control of the output frequency.

At block S102, in response to the display screen being in the self-refreshing state, notification information is transmitted to the AP after self-refreshing of the display screen is completed. The notification information is used for notifying the AP to transmit the image data to the display screen.

In the related art, the switching frequency of the AP for transmitting the image data and the self-refreshing frequency of the display screen are usually in a multiple relationship with each other. By comparison, in the embodiment of the present disclosure, it is directly monitored whether the AP currently needs to switch the output frequency, and when the AP currently needs to switch the output frequency, it is directly determined whether the AP is currently transmitting the image data to the display screen. If the AP is currently transmitting no image data to the display screen, then when the notification information is received, the switching of the output frequency is triggered. In this way, a delay of the frequency switching of the AP can be effectively avoided, so that the display frequency of the display screen can be updated in time, and the display control effect is improved.

At block S103, the image data transmitted by the AP is received, and the display frequency is updated with a first frequency at which the AP transmits the image data.

The first frequency may be the frequency after the AP switches the output frequency; that is, the first frequency may be the new output frequency in the above example.

In the embodiment of the present disclosure, when the self-refreshing of the display screen is finished and the notification information is transmitted to the AP, the image data transmitted by the AP can be received in real time, and the display frequency is updated with the first frequency at which the AP transmits the image data, so that the display frequency of the display screen can be updated in time.

In the embodiment of the present disclosure, it is determined, in the command mode in response to no image data being transmitted to the display screen by the AP currently, whether the display screen is in the self-refreshing state; in response to the display screen being in the self-refreshing state, notification information is transmitted to the AP after self-refreshing of the display screen is completed, the notification information being used for notifying the AP to transmit the image data to the display screen; and the image data transmitted by the AP is received, and the display frequency is updated with the first frequency at which the AP transmits the image data. In this way, when transmitting no image data to the display screen, the AP can perform frequency switching as long as the notification information is received, without requiring the switching frequency and the self-refreshing frequency of the display screen to be in a multiple relationship with each other. Therefore, the delay of the frequency switching of the AP can be effectively avoided, so that the display frequency of the display screen can be updated in time, and the display control effect is improved.

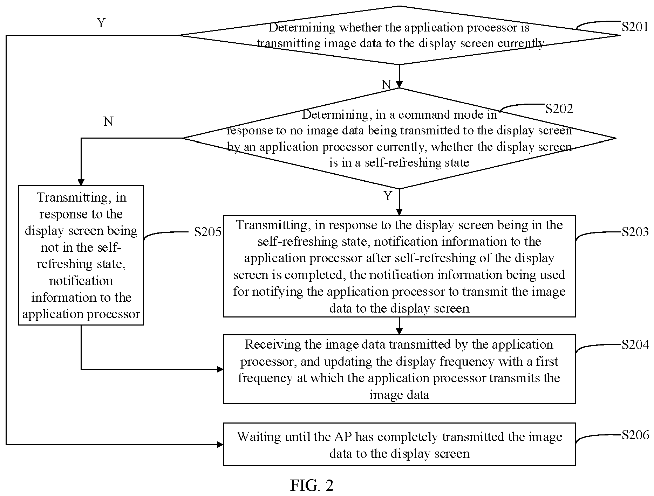

FIG. 2 is a flowchart illustrating a method for controlling a display frequency of a display screen according to an embodiment of the present disclosure.

Referring to FIG. 2, the method includes action at blocks S201 to S206.

At block S201, it is determined whether the AP is transmitting image data to the display screen currently. If so, the action at block S206 is executed; otherwise, the action at block S202 is executed.

In the specific implementation process of this embodiment, specifically, when it is determined that the output frequency needs to be switched currently, it is triggered to determine whether the AP is currently transmitting the image data to the display screen, which can effectively ensure the timeliness of the switching control of the output frequency.

At block S202, it is determined, in a command mode in response to no image data being transmitted to the display screen by the AP currently, whether the display screen is in a self-refreshing state. If so, the action at block S203 is executed; otherwise, the action at block S205 is executed.

Optionally, this embodiment also provides a processing logic for controlling the display screen to perform self-refreshing. In response to no image data being transmitted to the display screen by the AP currently, a first duration for which no image data is transmitted by the AP is determined. In response to the first duration reaching a time threshold, the display screen is controlled to enter the self-refreshing state.

The time threshold may be, for example, a. That is, the display screen may be controlled not to enter the self-refreshing state when the first duration for which no image data is transmitted by the AP is smaller than a, and the display screen may be controlled to enter the self-refreshing state when the first duration for which no image data is transmitted by the AP is greater than a.

In other words, it is determined, based on whether the AP transmits the image data, whether the display screen performs self-refreshing in the command mode. Specifically, if the AP does not transmit the image data any more, or when a time difference between the AP's next updating of image data and the AP's current updating and transmitting of image data is greater than the time threshold a, the display screen performs self-refreshing once based on the existing display frequency so as to sustain the next image retention. When the time difference is small than or equal to the time threshold value a, the display screen does not perform the self-refreshing, and continuously determines whether the AP continues to transmit the image data.

The above time threshold a can be determined as the shortest time for which the display screen can retain a picture without self-refreshing, for example, 30 ms, which is not limited here.

Optionally, the embodiment of the present disclosure further provides a control flow for the self-refreshing of the display screen in a video mode, during the application process. Specifically, in the video mode, in response to the image data being transmitted to the display screen by the AP currently, it is determined whether a change occurs between the image data received by the display screen and first image data. The first image data is the image data transmitted by the AP and received by the display screen previously. Self-refreshing control is performed on the display screen based on a result of said determining.

Optionally, performing the self-refreshing control on the display screen based on a result of said determining includes: controlling, when no change occurs between the image data received by the display screen and the first image data, or when a duration for which no change occurs between the image data received by the display screen and the first image data is smaller than or equal to the time threshold, the display screen not to enter the self-refreshing state; and controlling, when the change occurs between the image data received by the display screen and the first image data, or when the duration for which no change occurs between the image data received by the display screen and the first image data is greater than the time threshold, the display screen to enter the self-refreshing state.

That is, it is determined, based on the display screen's identifying the content of the image data transmitted by the AP, whether the display screen performs the self-refreshing in the video mode. Specifically, when identifying that no change occurs between the image data received by the display screen and the first image data, the display screen does not perform the self-refreshing. Further, when the duration for which no change occurs between the image data received by the display screen and the first image data is greater than the time threshold a, the display screen performs self-refreshing once; and when the duration for which no change occurs between the image data received by the display screen and the first image data is not greater than the time threshold a, the display screen continues not refreshing.

In the above, it is determined, based on whether the AP transmits the image data, whether the display screen performs the self-refreshing in the command mode. In the video mode, it is determined, based on whether a change occurs between the image data received by the display screen and the first image data, whether to perform the self-refreshing control on the display screen. In this way, hardware resource consumption required by the self-refreshing of the display screen can be effectively saved, and the influence on the frequency switching of the AP caused by the time consumed by the self-refreshing of the display screen can be indirectly reduced, so that the self-refreshing control of the display screen and the transmission mode (the command mode or the video mode) of image data can have good adaptability.

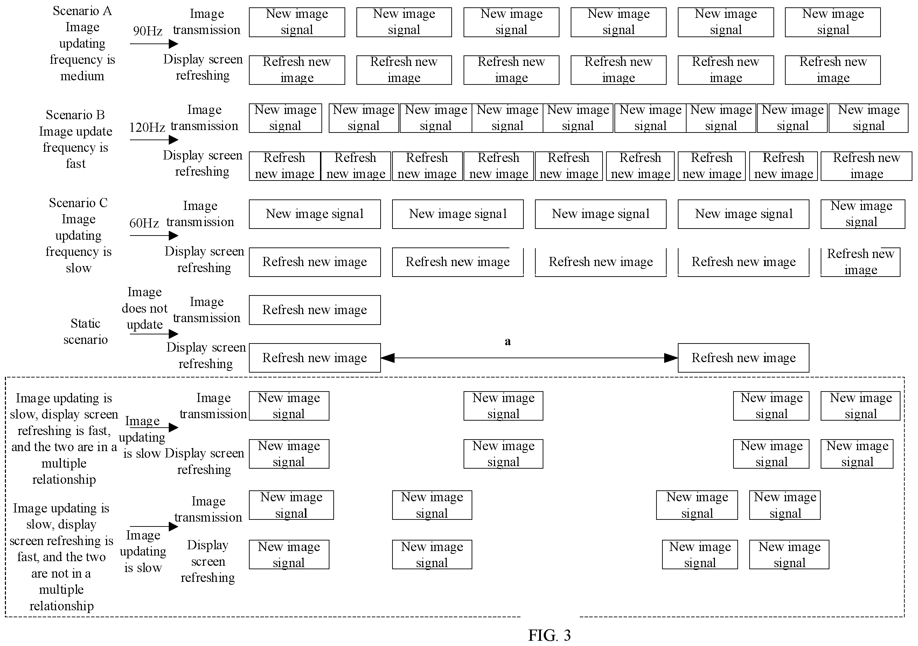

As an example, referring to FIG. 3, FIG. 3 is a schematic application diagram of an embodiment of the present disclosure. When the AP does not transmit image data to the display screen, the display screen does not perform the self-refreshing. After waiting for the time threshold a, the display screen starts to self-refreshing for one frame, and then continues to wait for the next time threshold a. When the update is slow, the display screen can perform refreshing synchronously to the frequency at which the image data is transmitted by the AP. The scenario schematic block at the bottom of FIG. 3 illustrates that in the embodiment of the present disclosure, the switching frequency of the AP for transmitting the image data and the self-refreshing frequency of the display screen may or may not be in a multiple relationship with each other, thus having strong application flexibility.

At block S203, in response to the display screen being in the self-refreshing state, notification information is transmitted to the AP after the self-refreshing of the display screen is completed. The notification information is used for notifying the AP to transmit the image data to the display screen.

In the related art, the switching frequency of the AP for transmitting the image data and the self-refreshing frequency of the display screen are usually in a multiple relationship with each other. By comparison, in the embodiment of the present disclosure, it is directly monitored whether the AP currently needs to switch the output frequency, and when the AP currently needs to switch the output frequency, it is directly determined whether the AP is currently transmitting the image data to the display screen. If the AP is currently transmitting no image data to the display screen, then when the notification information is received, the switching of the output frequency is triggered. In this way, a delay of the frequency switching of the AP can be effectively avoided, so that the display frequency of the display screen can be updated in time, and the display control effect is improved.

At block S204, the image data transmitted by the AP is received, and the display frequency is updated with a first frequency at which the AP transmits the image data.

The first frequency may be the frequency after the AP switches the output frequency; that is, the first frequency may be the new output frequency in the above example.

In the embodiment of the present disclosure, when the self-refreshing of the display screen is finished and the notification information is transmitted to the AP, the image data transmitted by the AP can be received in real time, and the display frequency is updated with the first frequency at which the AP transmits the image data, so that the display frequency of the display screen can be updated in time.

At block S205, in response to the display screen being not in the self-refreshing state, notification information is transmitted to the AP.

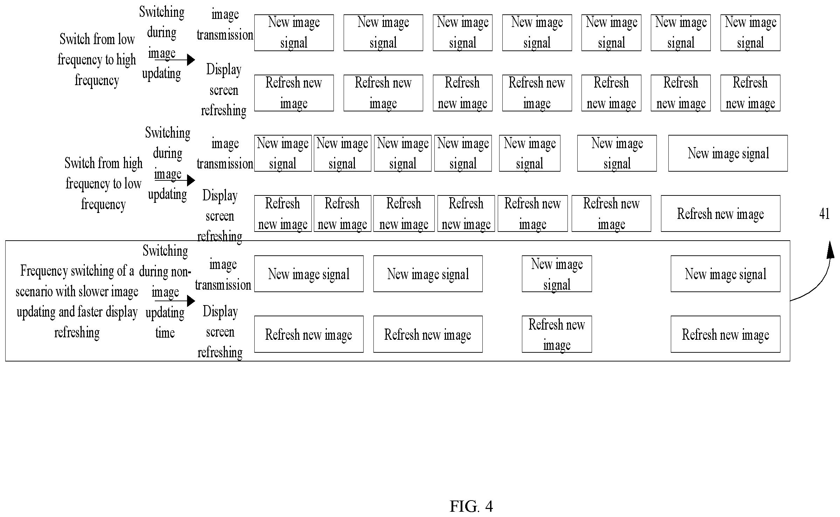

As an example, referring to FIG. 4, FIG. 4 is a schematic application diagram of the present disclosure. Enclosed by block 41 is a schematic application of the method for controlling the display frequency of the display screen of the present disclosure. Specifically, when the AP does not transmit the image data to the display screen, the output frequency is switched. Additionally, in the embodiment of the present disclosure, transmission of updated image data by the AP needs to be performed after the transmission of the previous image data is completed.

At block S206, it waits until the AP has completely transmitted the image data to the display screen.

In the specific execution process, if the AP is transmitting the image data to the display screen currently, the current output frequency is not switched, and it waits until the AP has completely transmitted the image data to the display screen.

In the specific execution process, if the AP is transmitting the image data to the display screen currently, the process of the AP currently transmitting the image data to the display screen can be monitored in real time, to know in time whether the AP has finished transmitting the image data to the display screen. As such, it can be monitored in time that the image data has been completely transmitted, so as to control the switching of the output frequency in time, and effectively match the requirement of zero delay from an overall control process.

In this embodiment, when it is determined that the output frequency needs to be switched currently, it is triggered to determine whether the AP is currently transmitting the image data to the display screen, which can effectively ensure the timeliness of the switching control of the output frequency. If the AP is currently transmitting the image data to the display screen, the process of the AP currently transmitting the image data to the display screen can be monitored in real time, so as to know in time whether the AP finishes transmitting the image data or not. As such, it can be monitored in time that the image data has been completely transmitted, so as to control the switching of output frequency in time, and effectively match the requirement of zero delay from an overall control process. The flexibility of display frequency control of the display screen is effectively improved, a refreshing power consumption of the display screen is reduced, and the adaptability between the self-refreshing mechanism of the display screen and the data transmission of the AP is effectively guaranteed.

FIG. 5 is a schematic structural diagram illustrating an apparatus for controlling a display frequency of a display screen according to an embodiment of the present disclosure.

Referring to FIG. 5, the apparatus 500 includes a first judgement module 501, a processing module 502, and an updating module 503.

The first judgement module 501 is configured to determine, in a command mode in response to no image data being transmitted to the display screen by an AP currently, whether the display screen is in a self-refreshing state.

The processing module 502 is configured to transmit, in response to the display screen being in the self-refreshing state, notification information to the application processor after self-refreshing of the display screen is completed, the notification information is used for notifying the application processor to transmit the image data to the display screen.

The updating module 503 is configured to receive the image data transmitted by the application processor and update the display frequency with a first frequency at which the application processor transmits the image data.

Optionally, in some embodiments, the processing module 502 is further configured to: transmit, in response to the display screen being not in the self-refreshing state, notification information to the AP.

Optionally, in some embodiments, referring to FIG. 6, the apparatus further includes a second judgement module 504.

The second judgement module 504 is configured to determine whether the AP is transmitting the image data to the display screen currently.

Optionally, in some embodiments, referring to FIG. 6, the apparatus further includes a first determining module 505.

The first determining module 505 is configured to determine, in response to no image data being transmitted to the display screen by the AP currently, a first duration for which no image data is transmitted by the AP.

The processing module 502 is further configured to control, in response to the first duration reaching a time threshold, the display screen to enter the self-refreshing state.

Optionally, in some embodiments, referring to FIG. 6, the apparatus further includes a second determining module 506.

The second determining module 506 is configured to determine, in a video mode in response to the image data being transmitted to the display screen by the AP currently, whether a change occurs between the image data received by the display screen and first image data, the first image data being the image data transmitted by the AP and received by the display screen previously.

The processing module 502 is further configured to perform self-refreshing control on the display screen based on a result of said determining.

Optionally, in some embodiments, the processing module 502 is further configured to control, when no change occurs between the image data received by the display screen and the first image data, or when a duration for which no change occurs between the image data received by the display screen and the first image data is smaller than or equal to the time threshold, the display screen not to enter the self-refreshing state; and control, when the change occurs between the image data received by the display screen and the first image data, or when the duration for which no change occurs between the image data received by the display screen and the first image data is greater than the time threshold, the display screen to enter the self-refreshing state.

It should be noted that, the explanation of the embodiment of the method for controlling the display frequency of the display screen in the embodiments of FIG. 1 to FIG. 4 is also applicable to the apparatus 500 for controlling the display frequency of the display screen in this embodiment, and the implementation principle is similar, which is not elaborated here.

In the embodiment of the present disclosure, it is determined, in the command mode in response to no image data being transmitted to the display screen by the AP currently, whether the display screen is in the self-refreshing state; in response to the display screen being in the self-refreshing state, notification information is transmitted to the AP after self-refreshing of the display screen is completed, the notification information being used for notifying the AP to transmit the image data to the display screen; and the image data transmitted by the AP is received, and the display frequency is updated with the first frequency at which the AP transmits the image data. In this way, when transmitting no image data to the display screen, the AP can perform frequency switching as long as the notification information is received, without requiring the switching frequency and the self-refreshing frequency of the display screen to be in a multiple relationship with each other. Therefore, the delay of the frequency switching of the AP can be effectively avoided, so that the display frequency of the display screen can be updated in time, and the display control effect is improved.

FIG. 7 is a schematic structural diagram illustrating an electronic device according to an embodiment of the present disclosure. The electronic device 70 includes a processor 701, a memory 702 configured to store executable program codes, a circuit board 703 on which the processor 701 and the memory 702 are disposed, and a power supply circuit 704 configured to supply power to at least one circuit or element of the electronic device. The processor 701 is configured to execute a program corresponding to the executable program codes by reading the executable program codes stored in the memory 702, to implement: determining, in a command mode in response to no image data being transmitted to the display screen by an AP currently, whether the display screen is in a self-refreshing state; transmitting, in response to the display screen being in the self-refreshing state, notification information to the AP after self-refreshing of the display screen is completed, the notification information being used for notifying the AP to transmit the image data to the display screen; and receiving the image data transmitted by the AP, and updating the display frequency with a first frequency at which the AP transmits the image data.

It should be noted that the explanation of the embodiment of the method for controlling the display frequency of the display screen in the embodiments of FIG. 1 to FIG. 4 is also applicable to the electronic device 70 of this embodiment, and the implementation principle thereof is similar, which is not elaborated here.

In the embodiment of the present disclosure, it is determined, in the command mode in response to no image data being transmitted to the display screen by the AP currently, whether the display screen is in the self-refreshing state; in response to the display screen being in the self-refreshing state, notification information is transmitted to the AP after self-refreshing of the display screen is completed, the notification information being used for notifying the AP to transmit the image data to the display screen; and the image data transmitted by the AP is received, and the display frequency is updated with the first frequency at which the AP transmits the image data. In this way, when transmitting no image data to the display screen, the AP can perform frequency switching as long as the notification information is received, without requiring the switching frequency and the self-refreshing frequency of the display screen to be in a multiple relationship with each other. Therefore, the delay of the frequency switching of the AP can be effectively avoided, so that the display frequency of the display screen can be updated in time, and the display control effect is improved.

In order to implement the above embodiments, the embodiments of the present disclosure provide a computer-readable storage medium having a computer program stored thereon. The computer program, when executed by a processor, implements the method for controlling the display frequency of the display screen in the above method embodiment.

It should be noted that in the description of the present disclosure, terms such as "first" and "second" are used herein for purposes of description and are not intended to indicate or imply relative importance or significance. In addition, in the description of the present disclosure, unless otherwise specified, "a plurality of' means at least two.

Any processes or method descriptions in a flowchart or otherwise described herein may be understood as representing modules, segments, or portions of code which include one or more executable instructions for implementing specific logical functions or steps of a process. The scope of the embodiments of the present disclosure includes alternative implementations in which the functions may not be performed in the order shown or discussed, including performing the functions substantially concurrently or in the reverse order based on the functions involved. This should be understood by those skilled in the art to which the embodiments of the present disclosure belong.

It should be understood that each part of the present disclosure may be realized by hardware, software, firmware or combination thereof. In the above embodiments, a plurality of steps or methods may be realized by software or firmware stored in the memory and executed by an appropriate instruction execution system. For example, if it is realized by the hardware, as in another embodiment, it may be realized by one or a combination of the following techniques known in the art: a discrete logic circuit having a logic gate circuit for performing a logic function on a data signal, an application-specific integrated circuit having an appropriate combination logic gate circuit, a programmable gate array (PGA), a field programmable gate array (FPGA), etc.

It would be understood by those skilled in the art that all or a part of the steps carried by the method in the above-described embodiments may be completed by relevant hardware instructed by a program. The program may be stored in a computer readable storage medium. When the program is executed, one or a combination of the steps of the method in the above-described embodiments may be completed.

In addition, individual functional units in the embodiments of the present disclosure may be integrated in one processing module or may be separately physically present, or two or more units may be integrated in one module. The integrated module as described above may be achieved in the form of hardware, or may be achieved in the form of a software functional module. If the integrated module is achieved in the form of a software functional module and sold or used as a separate product, the integrated module may also be stored in a computer readable storage medium.

The storage medium mentioned above may be read-only memories, magnetic disks or optical discs, etc.

In the description of this specification, references to the terms "an embodiment", "some embodiments", "illustrative embodiments", "an example", "a specific example", "some examples", etc., mean that specific features, structure, materials, or characteristics described in conjunction with the embodiment or example are included in at least one embodiment or example of the present disclosure. In this specification, the schematic representations of the above terms do not necessarily refer to the same embodiment or example. Moreover, the described specific features, structures, materials or characteristics may be combined in any one or more embodiments or examples in a suitable manner.

Although embodiments of the present disclosure have been shown and described above, it should be understood that above embodiments are just explanatory, and cannot be construed to limit the present disclosure. For those skilled in the art, changes, modifications, alternatives, and variations can be made to the embodiments within the scope of the present disclosure.

## Claims

1. A method for controlling a display frequency of a display screen, comprising:
determining, in a command mode in response to no image data being transmitted to the display screen by an application processor currently, whether the display screen is in a self-refreshing state;
transmitting, in response to the display screen being in the self-refreshing state, notification information to the application processor after self-refreshing of the display screen is completed, the notification information being used for notifying the application processor to transmit the image data to the display screen; and
receiving the image data transmitted by the application processor, and updating the display frequency with a first frequency at which the application processor transmits the image data.

2. The method for controlling the display frequency of the display screen according to claim 1, further comprising, subsequent to determining whether the display screen is in the self-refreshing state:
transmitting, in response to the display screen being not in the self-refreshing state, notification information to the application processor.

3. The method for controlling the display frequency of the display screen according to claim 1, further comprising, prior to no image data being transmitted to the display screen by the application processor currently:
determining whether the application processor is transmitting image data to the display screen currently.

4. The method for controlling the display frequency of the display screen according to claim 3, further comprising, subsequent to determining whether the application processor is transmitting the image data to the display screen currently:
determining, in response to no image data being transmitted to the display screen by the application processor currently, a first duration for which no image data is transmitted by the application processor; and
controlling, in response to the first duration reaching a time threshold, the display screen to enter the self-refreshing state.

5. The method for controlling the display frequency of the display screen according to claim 4, further comprising:
determining, in a video mode in response to the image data being transmitted to the display screen by the application processor currently, whether a change occurs between the image data received by the display screen and first image data, the first image data being the image data transmitted by the application processor and received by the display screen previously; and
performing self-refreshing control on the display screen based on a result of said determining.

6. The method for controlling the display frequency of the display screen according to claim 5, wherein said performing the self-refreshing control on the display screen based on the result of said determining comprises:
controlling, when no change occurs between the image data received by the display screen and the first image data, or when a duration for which no change occurs between the image data received by the display screen and the first image data is smaller than or equal to the time threshold, the display screen not to enter the self-refreshing state; and
controlling, when the change occurs between the image data received by the display screen and the first image data, or when the duration for which no change occurs between the image data received by the display screen and the first image data is greater than the time threshold, the display screen to enter the self-refreshing state.

7. The method for controlling the display frequency of the display screen according to claim 1, further comprising, prior to determining, in the command mode in response to no image data being transmitted to the display screen by the application processor currently, whether the display screen is in the self-refreshing state:
monitoring, while the image data is being transmitted to the display screen by the application processor, in real time whether an output frequency needs to be switched currently.

8. The method for controlling the display frequency of the display screen according to claim 7, wherein said monitoring in real time whether the output frequency needs to be switched currently further comprises:
monitoring whether a change occurs in an updating frequency of the image data; and
determining, in response to monitoring that the change occurs in the updating frequency of the image data, that the output frequency at which the application processor transmits the image data to the display screen needs to be switched currently.

9. The method for controlling the display frequency of the display screen according to claim 1, wherein said receiving the image data transmitted by the application processor and updating the display frequency with the first frequency at which the application processor transmits the image data comprises:
monitoring, in response to the image data being transmitted to the display screen by the application processor, in real time a process of transmitting the image data to the display screen by the application processor.

10. An apparatus for controlling a display frequency of a display screen, comprising:
a first judgement module configured to determine, in a command mode in response to no image data being transmitted to the display screen by an application processor currently, whether the display screen is in a self-refreshing state;
a processing module configured to transmit, in response to the display screen being in the self-refreshing state, notification information to the application processor after self-refreshing of the display screen is completed, the notification information being used for notifying the application processor to transmit the image data to the display screen; and
an updating module configured to receive the image data transmitted by the application processor and update the display frequency with a first frequency at which the application processor transmits the image data.

11. The apparatus for controlling the display frequency of the display screen according to claim 10, wherein the processing module is further configured to:
transmit, in response to the display screen being not in the self-refreshing state, notification information to the application processor.

12. The apparatus for controlling the display frequency of the display screen according to claim 10, further comprising:
a second judgement module configured to determine whether the application processor is transmitting the image data to the display screen currently.

13. The apparatus for controlling the display frequency of the display screen according to claim 10, further comprising:
a first determining module configured to determine, in response to no image data being transmitted to the display screen by the application processor currently, a first duration for which no image data is transmitted by the application processor,
wherein the processing module is further configured to control, in response to the first duration reaching a time threshold, the display screen to enter the self-refreshing state.

14. The apparatus for controlling the display frequency of the display screen according to claim 13, further comprising:
a second determining module configured to determine, in a video mode in response to the image data being transmitted to the display screen by the application processor currently, whether a change occurs between the image data received by the display screen and first image data, the first image data being the image data transmitted by the application processor and received by the display screen previously,
wherein the processing module is further configured to perform self-refreshing control on the display screen based on a result of said determining.

15. The apparatus for controlling the display frequency of the display screen according to claim 14, wherein the processing module is further configured to:
control, when no change occurs between the image data received by the display screen and the first image data, or when a duration for which no change occurs between the image data received by the display screen and the first image data is smaller than or equal to the time threshold, the display screen not to enter the self-refreshing state; and
control, when the change occurs between the image data received by the display screen and the first image data, or when the duration for which no change occurs between the image data received by the display screen and the first image data is greater than the time threshold, the display screen to enter the self-refreshing state.

16. The apparatus for controlling the display frequency of the display screen of claim 10, wherein the apparatus is further configured to:
monitor, while the image data is being transmitted to the display screen by the application processor, in real time whether an output frequency needs to be switched currently

17. The apparatus for controlling the display frequency of the display screen of claim 16, wherein the apparatus is further configured to:
monitor whether a change occurs in an updating frequency of the image data; and
determine, in response to monitoring that the change occurs in the updating frequency of the image data, that the output frequency at which the application processor transmits the image data to the display screen needs to be switched currently.

18. The apparatus for controlling the display frequency of the display screen of claim 10, wherein the apparatus is further configured to:
monitor, in response to the image data being transmitted to the display screen by the application processor, in real time a process of transmitting the image data to the display screen by the application processor.

19. A computer-readable storage medium, having a computer program stored thereon, wherein the computer program, when executed by a processor, implements the method for controlling the display frequency of the display screen according to any of claims 1-9.

20. An electronic device, comprising:
a processor;
a memory configured to store executable program codes;
a circuit board on which the processor and the memory are disposed; and
a power supply circuit configured to supply power to at least one circuit or element of the electronic device,
wherein the processor is configured to execute a program corresponding to the executable program codes by reading the executable program codes stored in the memory, to implement the method for controlling the display frequency of the display screen according to any of claims 1-9.
